# EUROPEAN PATENT SPECIFICATION

(11) **EP 1 669 554 B1**
(45) Date of publication and mention of the grant of the patent: **26.12.2007**
(21) Application number: 05257401.9
(22) Date of filing: 01.12.2005
(51) Int. Cl.: F01D 25/28, F01D 25/16, F01D 3/04, F02C 7/06

(54) **Thrust bearing assembly for a gas turbine engine**
Axiallageranordnung für Gasturbinen
Assemblage de palier de butée pour turbines à gaz

(30) Priority: 08.12.2004 US 6925
(43) Date of publication of application: 14.06.2006
(73) Proprietor: General Electric Company, Schenectady, NY 12345 (US)
(72) Inventor: Wakeman, Thomas George, Ohio 45628 (US); Melton, Stephen Eugene, Ohio 45069 (US); Murphy, Michael Peter, Ohio 45140 (US)
(74) Representative: Goode, Ian Roy

(56) References cited:
- GB-A- 965 465
- GB-A- 998 519
- US-A- 4 084 861
- US-A- 4 716 721
- US-A1- 2003 033 817

## Description

This invention relates generally to gas turbine engines, and more specifically to a gas turbine engine and method of assembling a gas turbine engine.

At least some known gas turbine engines include, in serial flow arrangement, a high-pressure compressor for compressing air flowing through the engine, a combustor in which fuel is mixed with the compressed air and ignited to form a high temperature gas stream, and a high pressure turbine. The high-pressure compressor, combustor and high-pressure turbine are sometimes collectively referred to as the core engine. Such gas turbine engines may also include a low-pressure turbine or power turbine for transmitting power generated by the core engine to a driven component, such as a generator, for example.

Gas turbine engines are used in many applications, including aircraft, power generation, and marine applications. At least some known gas turbine engines include two thrust mounts that are coupled between an exterior surface of the gas turbine engine and a support structure. During engine operation, at least some known thrust mounts may cause at least some structural distortion or "out of round" condition of the gas turbine engine casing which may reduce blade tip clearances within the gas turbine engine. Moreover, when a power turbine is coupled to the core gas turbine engine, the combination of loads and geometries may also cause some structural distortion which may also reduce blade tip clearances within the gas turbine engine.

For example, during operation, the thrust load generated by at least some known power turbine rotors is approximately 1110 kN or 250,000 lb in a direction that is opposite to the direction of thrust generated by the gas turbine engine. Accordingly, during operation, thrust generated by the power turbine is transferred to the engine thrust mounts, thus increasing the possibility that the gas turbine engine may experience structural distortion, or an "out of round" condition. Alternatively, thrust generated by the power turbine may be transferred to the power turbine thrust bearing support which may also increase the possibility that the gas turbine engine may experience structural distortion. To facilitate reducing such structural distortion, at least some known turbines attempt to balance loading between the engine thrust mounts and the power turbine thrust bearing support. However, even if the power turbine thrust load is balanced between the engine thrust mounts and the power turbine thrust bearing support, the combined power turbine rotor load and the gas turbine engine residual load may cause the core gas turbine engine casing to distort which may reduce blade tip clearances within the gas turbine engine.

US 2003/0033817 discloses a turbogroup of a power generating plant.

US 4,716,721 discloses a gas turbine engine having inner and outer housings, where the inner housing contains one of the engine compressors.

In a first aspect of the invention, a thrust assembly for a gas turbine engine assembly in accordance with appended claim 1 is provided. The thrust assembly includes a first annular portion having a first radius coupled to the power turbine, a second annular portion having a second radius coupled to the thrust bearing, the first radius different than the second radius, and a plurality of structural members extending between the first and second portions such that the thrust assembly has a substantially frusto-conical shape.

In a further aspect, a gas turbine engine assembly is provided. The gas turbine engine assembly includes a gas turbine engine including a first compressor, a second compressor downstream from the first compressor, a turbine coupled in flow communication with the second compressor, a power turbine coupled to the gas turbine engine, a thrust bearing coupled to the power turbine, and a thrust assembly according to the first aspect of the invention coupled between the power turbine and the thrust bearing.

Embodiments of the invention will now be described, by way of example, with reference to the accompanying drawings, in which:
Figure 1 is a block diagram of an exemplary gas turbine engine;
Figure 2 is a side view of a portion of the gas turbine engine shown in Figure 1 including a support cage;
Figure 3 is a perspective view of the support cage shown in Figure 2;
Figure 4 is an end view of the support cage shown in Figure 2;
Figure 5 is a top view of a portion of the support cage shown in Figure 2;
Figure 6 is a side view of a portion of the support cage shown in Figure 5; and
Figure 7 is a side view of a portion of a connecting member shown in Figures 5 and 6.

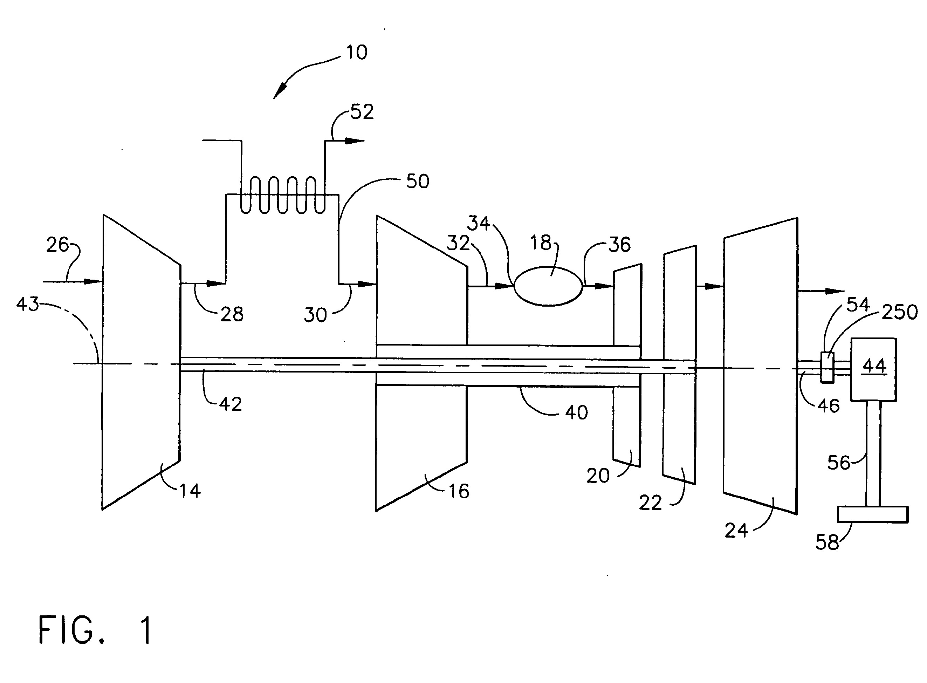

Figure 1 is a block diagram of a gas turbine engine assembly 10. Gas turbine engine 10 includes, in serial flow relationship, a low pressure compressor or booster 14, a high pressure compressor 16, a combustor 18, a high pressure turbine 20, an intermediate pressure turbine 22, and a low pressure or power turbine 24. Low pressure compressor or booster 14 has an inlet 26 and an outlet 28, and high pressure compressor 16 includes an inlet 30 and an outlet 32. Combustor 18 has an inlet 34 that is substantially coincident with high pressure compressor outlet 32, and an outlet 36. In the exemplary embodiment, gas turbine engine assembly 10 is an LMS100 manufactured by General Electric Company.

High pressure turbine 20 is coupled to high pressure compressor 16 with a first rotor shaft 40, and intermediate pressure turbine 22 is coupled to low pressure compressor 14 with a second rotor shaft 42. Rotor shafts 40 and 42 are each substantially coaxially aligned with respect to a longitudinal centerline axis 43 of engine 10. Engine 10 may be used to drive a load 44, such as a generator, which may be coupled to a power turbine shaft 46. Alternatively, the load may be coupled to a forward extension (not shown) of rotor shaft 42.

In the exemplary embodiment, gas turbine engine assembly 10 also includes an intercooler heat exchanger 50 that is positioned between low pressure compressor or booster 14 and high pressure compressor 16 to facilitate reducing the temperature of the air entering high pressure compressor 16. Using an intercooler facilitates increasing the efficiency of the engine while reducing the quantity of work performed by the high pressure compressor. At least one known intercooler heat exchanger uses ambient air or water as a cooling medium 52 to cool the air flow exiting the booster compressor. In an alternative embodiment, gas turbine engine 10 does not include intercooler heat exchanger 50.

In operation, ambient air, drawn into low pressure compressor inlet 26, is compressed and channeled downstream to high pressure compressor 16. High pressure compressor 16 further compresses the air and delivers high pressure air to combustor 18 where it is mixed with fuel, and the mixture is ignited to generate high temperature combustion gases. The combustion gases are channeled from combustor 18 to drive turbines 20, 22, and 24.

More specifically, power turbine 24 is aerodynamically coupled to intermediate pressure turbine 22 such that thrust generated by gas turbine engine 10 is used to drive power turbine 24. Moreover, since power turbine 24 is coupled to a load 44, gas turbine engine assembly 10 also drives load 44. In the exemplary embodiment, load 44 is coupled to power turbine 24 utilizing a thrust bearing 54, and coupled to a support structure 56 utilizing a pedestal 58, for example. More specifically, both power turbine 24 and support structure 56 are coupled along centerline axis 43 such that gas turbine engine assembly 10 is substantially axially aligned with thrust bearing 54 and therefore load 44. In the exemplary embodiment, the core gas turbine engine casing is mechanically coupled to the power turbine casing using a plurality of fasteners, such that the power turbine rotor is aerodynamically coupled to the core gas turbine engine.

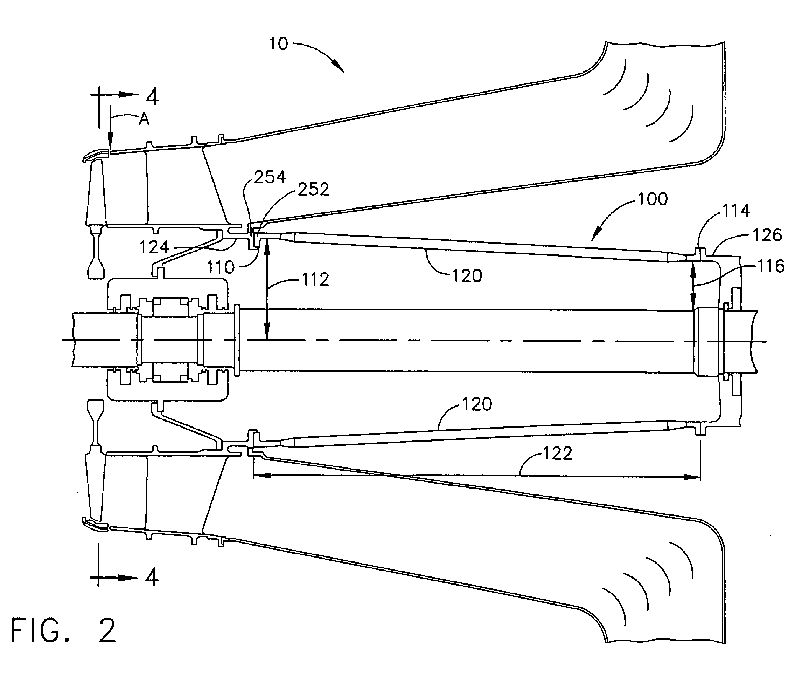

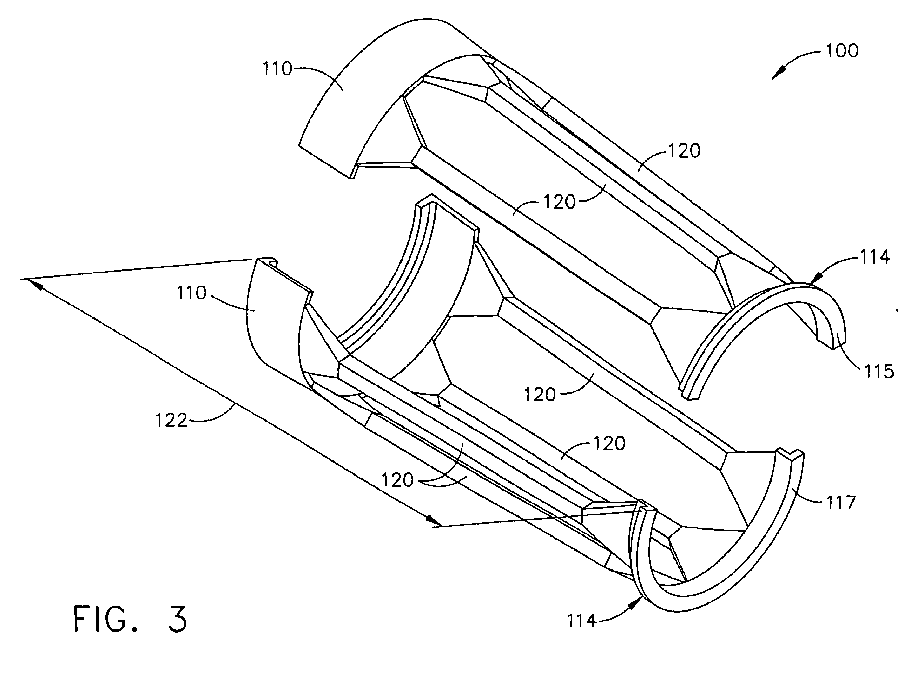

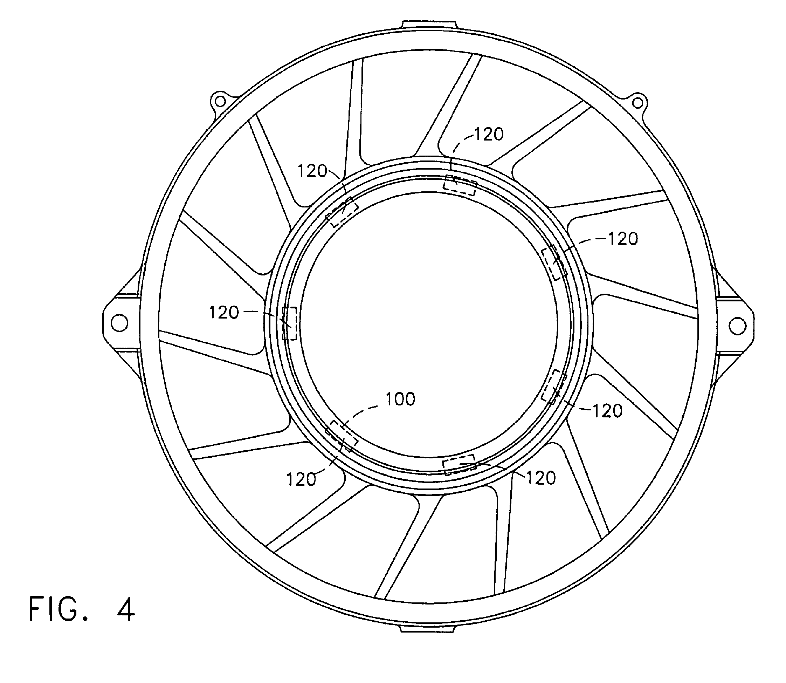

Figure 2 is a side view of a portion of the gas turbine engine shown in Figure 1 including a support cage 100. Figure 3 is a perspective view of the support cage shown in Figure 2. Figure 4 is an end view of the support cage shown in Figure 2. In the exemplary embodiment, support cage 100 is also referred to as a gorilla cage.

In the exemplary embodiment, support cage 100 is substantially frusto-conical shaped. Alternatively, the term frusto-conical as used herein is defined as a truncated cone or pyramid. Accordingly, support cage 100 includes a first portion 110 that is substantially circular and has a first radius 112, and a second portion 114 that is substantially circular and has a second radius 116. In the exemplary embodiment, first radius 112 is larger than second radius 116.

Support cage 100 also includes a plurality of structural members 120 that extend between, and are coupled to, first and second portions 110 and 114, respectively. In the exemplary embodiment, first and second portions 110 and 114 are substantially circular. Each structural members 120 has a length 122 that is sized to enable support cage 100 to extend between a turbine rear frame 124 and a thrust bearing housing 126. Moreover, in the exemplary embodiment, each member 120 has a substantially similar length such that first portion 110 is substantially parallel to second portion 114. In the exemplary embodiment, support cage 100 includes seven structural members 120 that are approximately equally spaced around a circumference of first and second portions 110 and 114, respectively. Alternatively, support cage 100 includes more or less than seven structural members.

In the exemplary embodiment, support cage 100 includes a first support cage structure 115 and a second support cage structure 117. More specifically, support cage 100 is fabricated in two sections 115 and 117, respectively, wherein each structure includes a plurality of members 120, such that support cage 100 can be coupled to gas turbine assembly 10. In one embodiment, first support cage structure 115 is coupled to second support cage structure 117 using a welding procedure, for example. In an alternative embodiment, first support cage structure 115 is coupled to second support cage structure 117 using a plurality of mechanical fasteners. In the exemplary embodiment, first support cage structure 115 extends at least 180 degrees around the power turbine centerline axis, and second support cage structure 117 extends less than 180 degrees around the power turbine centerline axis. In an alternative embodiment, first and second support cage structures 115 and 117 each extend 180 degrees around the power turbine centerline axis.

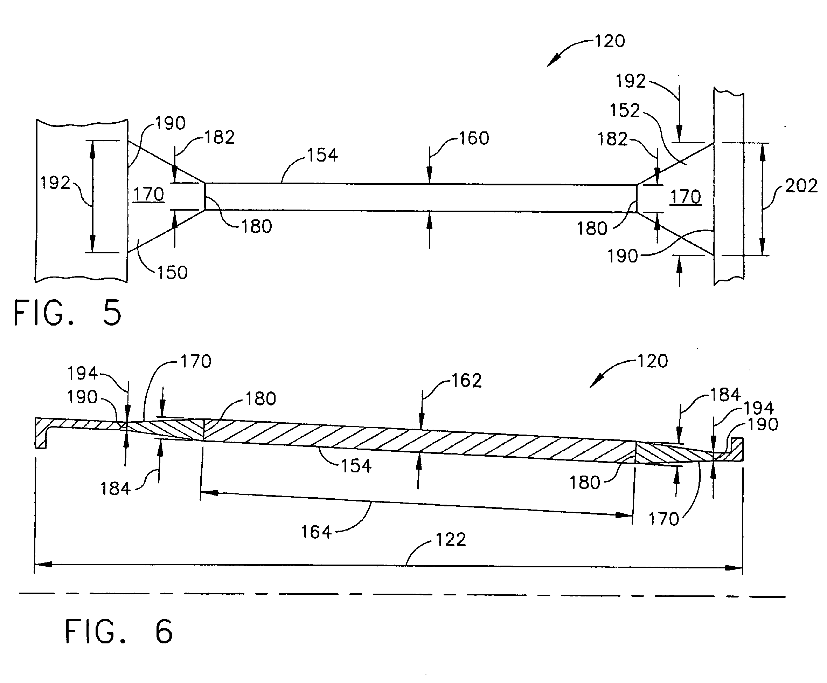

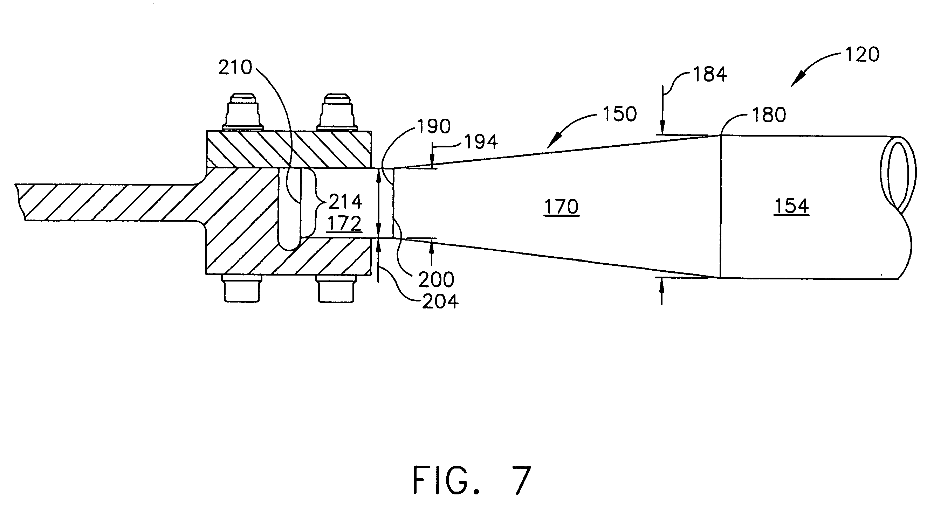

Figure 5 is a top view of a portion of the support cage shown in Figure 2. Specifically, Figure 5 is a top view of a structural member 120. Figure 6 is a side view of the structural member shown in Figure 5. Figure 7 is a side view of a portion of a connecting member 120 shown in Figures 5 and 6. Each structural member 120 includes a first attachment foot 150, a second attachment foot 152, and a connecting member 154 that extends between, and is coupled to, first and second attachment feet 150 and 152, respectively. Connecting member 154 has a width 160, a thickness 162, and a length 164. First and second attachment feet 150 and 152 each include a first portion 170 and a second portion 172 that is coupled to first portion 170. In one embodiment, first and second portions 170 and 172 are unitarily formed together to form unitary first and second attachment feet 150 and 152. Attachment feet 150 and 152 are each coupled to connecting member 154 through a brazing and/or welding procedure, for example. In another embodiment, first and second attachment feet 150 and 152, and connecting member 154 are fabricated together unitarily to form each member 120. In an alternative embodiment, each member 120 is fabricated from a plurality of pieces.

Attachment foot first portion 170 includes a first end 180 that has a width 182 that is approximately equal to connecting member width 160, and a thickness 184 that is approximately equal to connecting member thickness 162. Attachment foot first portion 170 includes a second end 190 that has a width 192 that is wider than first end width 182, and a thickness 194 that is narrower than first end thickness 184. Accordingly, and in the exemplary embodiment, first portion 170 has a width and thickness 182 and 184, that are approximately equal to width and thickness 160 and 162 of connecting member 120. Moreover, first portion 170 has a width that gradually increases from first end 180 to second end 190, and a thickness that gradually decreases from first end 180 to second end 190.

Attachment foot second portion 172 includes a first end 200 that has a width 202 that is approximately equal to first portion width 192, and a thickness 204 that is approximately equal to first portion thickness 194. Attachment foot second portion 172 includes a second end 210 that has a width 212 that is approximately equal to width 202 and a thickness 214 that is approximately equal to thickness 204. Accordingly, and in the exemplary embodiment, second portion 172 has a width and thickness 200 and 204, that are approximately equal between first and second ends 200 and 210, respectively.

In the exemplary embodiment, support cage 100 is fabricated from a material, such as, but not limited to, AISI 4140 steel which has a relatively high modulus, good ductility (LCF capability), moderate strength, and relatively low cost. In the exemplary embodiment, members 120 flex in an axial direction and therefore absorb thrust loading between gas turbine engine 10 and power turbine 24. In another embodiment, members 120 are fabricated from a metallic material that is different than first and second portions 110 and 114, respectively.

During assembly, support cage 100 is coupled between a power turbine thrust bearing thrust housing 126 and an interior surface 252 of power turbine 24. More specifically, first portion 110 is coupled to a power turbine frame aft internal flange 254, and second portion 114 is coupled to an external surface of thrust bearing housing 126. In the exemplary embodiment, support cage 100 is coupled to gas turbine engine 10 using a plurality of mechanical fasteners such as nuts and bolts, for example. In another embodiment, support cage 100 is coupled to gas turbine engine 10 using a welding and brazing procedure for example.

In use, support cage 100 facilitates reducing the thrust load generated by the power turbine. More specifically, support cage 100 facilitates balancing the thrust load generated by the power turbine by transferring a portion of the thrust load back to the gas turbine engine. For example, in the exemplary embodiment, gas turbine engine assembly 10 generates approximately 1156 kN or 260,000 lbs. of thrust in an axially forward direction, whereas power turbine 24 generates approximately 1067 kN or 240,000 lbs in an axially aft direction. Accordingly, coupling power turbine 24 to thrust bearing 54 using support cage 100 facilitates balancing the total gas turbine assembly thrust flow between gas turbine engine 10 and power turbine 24 at the engine centerline thereby reducing thrust load distortions seen by known gas turbine engines utilizing side mounted thrust supports. Moreover, support cage 100 facilitates reducing the gas turbine engine structural distortion thereby improving blade tip clearances within the gas turbine engine.

The above-described support cage provides a cost-effective and highly reliable thrust assembly that includes a substantially frusto-conical shape for transferring the power turbine thrust load from the power turbine thrust bearing to the gas turbine engine thrust mounts. Accordingly, a thrust path is created between the power turbine thrust bearing and the gas turbine engine in a cost-effective manner.

An exemplary embodiment of thrust assembly is described above in detail. The thrust assembly is not limited to the specific embodiments described herein, but rather, components of the assembly may be utilized independently and separately from other components described herein. Moreover, the thrust assembly described herein can also be used in combination with a variety of gas turbine engines.

## Claims

1. A thrust assembly (100) for a gas turbine engine assembly that includes a gas turbine engine (10), a power turbine (24) coupled to the gas turbine engine, and a thrust bearing (54) coupled to the power turbine, said thrust assembly comprising:
a first annular portion (110) having a first radius (112) coupled to said power turbine (24);
a second annular portion (114) having a second radius (116) coupled to said thrust bearing (54), said first radius different than said second radius; and **characterized by**:
a plurality of structural members (120) extending between said first and second portions (110,114) such that said thrust assembly (100) has a substantially frusto-conical shape.

2. A thrust assembly (100) in accordance with Claim 1 wherein said first radius (112) is greater than said second radius (116).

3. A thrust assembly (100) in accordance with Claim 1 wherein said first portion (110), said second portion (114), and said structural members (120) are formed unitarily.

4. A thrust assembly (100) in accordance with Claim 1 wherein said connecting members (120) comprise:
a first attachment foot (150);
a second attachment foot (152); and
a connecting member (154) that extends between and is coupled to said first and second attachment feet.

5. A thrust assembly (100) in accordance with Claim 4 wherein said first attachment foot (150) is coupled to said first portion (110) and said second attachment foot (152) is coupled to said second portion (114).

6. A thrust assembly (100) in accordance with Claim 4 further comprising:
a connecting member (154) having a width (160) and a thickness (162); and
a first attachment foot (150) comprising:
a first end (180) and a second end (190), said first end having a width (182) and a thickness (184) that is substantially similar to said connecting member width and thickness, said second end having a width (192) that is substantially greater than said connecting member width and a thickness (194) that is substantially less than said connecting member thickness.

7. A thrust assembly (100) in accordance with Claim 1 wherein said thrust assembly comprises seven connecting members (154).

8. A gas turbine engine assembly comprising:
a gas turbine engine (10) comprising:
a first compressor (14);
a second compressor (16) downstream from said first compressor;
a turbine (20) coupled in flow communication with said second compressor;
a power turbine (24) coupled to said gas turbine engine;
a thrust bearing (54) coupled to said power turbine; and
a thrust assembly (100) according to claim 1 coupled between said power turbine (24) and said thrust bearing (54).

## Patentansprüche

1. Schubanordnung (100) für eine Gasturbinentriebwerksanordnung, die ein Gasturbinentriebwerk (10), eine mit dem Gasturbinentriebwerk gekoppelte Antriebsturbine (24) und ein mit der Antriebsturbine gekoppeltes Schublager (54) enthält, wobei die Schubanordnung aufweist:
einen ersten ringförmigen Abschnitt (110) mit einem ersten Radius (112), der mit der Antriebsturbine (24) gekoppelt ist;
einen zweiten ringförmigen Abschnitt (114) mit einem zweiten Radius (116), der mit dem Schublager (54) gekoppelt ist, wobei sich der erste Radius von dem zweiten Radius unterscheidet; und
**gekennzeichnet durch**:
mehrere tragende Elemente (120), die sich zwischen den ersten und zweiten Abschnitten (100, 114) so erstrecken, dass die Schubanordnung (100) eine im Wesentlichen kegelstumpfförmige Form hat.

2. Schubanordnung (100) nach Anspruch 1, wobei der erste Radius (112) größer als der zweite Radius (116) ist.

3. Schubanordnung (100) nach Anspruch 1, wobei der erste Abschnitt (110), der zweite Abschnitt (114) und die tragenden Elemente (120) in einem Stück ausgebildet sind.

4. Schubanordnung (100) nach Anspruch 1, wobei die Verbindungselemente (120) aufweisen:
einen ersten Befestigungsfuß (150);
einen zweiten Befestigungsfuß (152); und
ein Verbindungselement (154), das sich zwischen dem ersten und zweiten Verbindungsfuß erstreckt und damit gekoppelt ist.

5. Schubanordnung (100) nach Anspruch 4, wobei der erste Befestigungsfuß (150) mit dem ersten Abschnitt (110) gekoppelt ist, und der zweite Befestigungsfuß (152) mit dem zweiten Abschnitt (114) gekoppelt ist.

6. Schubanordnung (100) nach Anspruch 4, ferner aufweisend:
ein Verbindungselement (154) mit einer Breite (160) und einer Dicke (162); und
einen ersten Befestigungsfuß (150), mit:
einem ersten Ende (180) und einem zweiten Ende (190), wobei das erste Ende eine Breite (182) und eine Dicke (184) hat, die im Wesentlichen ähnlich der Breite und Dicke des Verbindungselementes ist, während das zweite Ende eine Breite (192) hat, die wesentlich größer als die Breite des Verbindungselementes ist, und eine Dicke (194), die wesentlich kleiner als die Dicke des Verbindungselementes ist.

7. Schubanordnung (100) nach Anspruch 1, wobei die Schubanordnung sieben Verbindungselemente (154) aufweist.

8. Gasturbinentriebwerksanordnung, aufweisend:
ein Gasturbinentriebwerk (10), mit:
einem ersten Kompressor (14);
einem zweiten Kompressor (16) stromabwärts von dem ersten Kompressor;
einer Turbine (20), die in Strömungsverbindung mit dem zweiten Kompressor gekoppelt ist;
einer Antriebsturbine (24), die mit dem Gasturbinentriebwerk gekoppelt ist;
einem Schublager (54), das mit der Antriebsturbine gekoppelt ist; und
einer Schubanordnung (100) nach Anspruch 1, die zwischen die Antriebsturbine (24) und das Schublager (54) gekoppelt ist.

## Revendications

1. Ensemble de poussée (100) pour un ensemble de turbomoteur à gaz qui comporte un turbomoteur à gaz (10), une turbine d'entraînement (24) couplée au turbomoteur à gaz et un palier de poussée (54) couplé à la turbine d'entraînement, ledit ensemble de poussée comprenant :
une première partie annulaire (110) présentant un premier rayon (112) couplée à ladite turbine d'entraînement (24) ;
une seconde partie annulaire (114) présentant un second rayon (116) couplée audit palier de poussée (54), ledit premier rayon étant différent dudit second rayon ; et **caractérisé par** :
une pluralité d'éléments structurels (120) s'étendant entre lesdites première et seconde parties (110, 114) de telle sorte que ledit ensemble de poussée (100) présente une forme sensiblement tronconique.

2. Ensemble de poussée (100) selon la revendication 1, dans lequel ledit premier rayon (112) est supérieur audit second rayon (116).

3. Ensemble de poussée (100) selon la revendication 1, dans lequel ladite première partie (110), ladite seconde partie (114) et lesdits éléments structurels (120) sont formés de manière unitaire.

4. Ensemble de poussée (100) selon la revendication 1, dans lequel lesdits éléments de liaison (120) comprennent :
un premier pied de fixation (150) ;
un second pied de fixation (152) ; et
un élément de liaison (154) qui s'étend entre lesdits premier et second pieds de fixation et est couplé à ceux-ci.

5. Ensemble de poussée (100) selon la revendication 4, dans lequel ledit premier pied de fixation (150) est couplé à ladite première partie (110) et ledit second pied de fixation (152) est couplé à ladite seconde partie (114).

6. Ensemble de poussée (100) selon la revendication 4, comprenant, en outre :
un élément de liaison (154) présentant une largeur (160) et une épaisseur (162) ; et
un premier pied de fixation (150) comprenant :
une première extrémité (180) et une seconde extrémité (190), ladite première extrémité présentant une largeur (182) et une épaisseur (184) qui sont sensiblement similaires à la largeur et l'épaisseur dudit élément de liaison, ladite seconde extrémité présentant une largeur (192) qui est sensiblement supérieure à la largeur dudit élément de liaison et une épaisseur (194) qui est sensiblement inférieure à l'épaisseur dudit élément de liaison.

7. Ensemble de poussée (100) selon la revendication 1, dans lequel ledit ensemble de poussée comprend sept éléments de liaison (154).

8. Ensemble de turbomoteur à gaz, comprenant :
un turbomoteur à gaz (10) comprenant :
un premier compresseur (14) ;
un second compresseur (16) en aval dudit premier compresseur ;
une turbine (20) couplée en communication fluidique avec ledit second compresseur ;
une turbine d'entraînement (24) couplée audit turbomoteur à gaz ;
un palier de poussée (54) couplé à ladite turbine d'entraînement ; et
un ensemble de poussée (100) selon la revendication 1 couplé entre ladite turbine d'entraînement (24) et ledit palier de poussée (54).
